# DEMANDE DE BREVET EUROPEEN

(11) **EP 0 725 358 A2**
(43) Date de publication de la demande: **07.08.1996**
(21) Numéro de dépôt: 96810004.0
(22) Date de dépôt: 05.01.1996
(51) Int. Cl.: G06K 7/00, G06K 7/10

(54) **Dispositif de transmission d'énergie pour étiquette opto-électronique**

(30) Priorité: 31.01.1995 CH 262/95
(71) Demandeur: GAY FRERES S.A., CH-1211 Genève 3 (CH)
(72) Inventeur: Berney, Jean C., CH-1343 Les Charbonnières (CH)
(74) Mandataire: Frei, Alexandra Sarah

(57) **Abrégé**

La présente invention concerne un dispositif pour alimenter des étiquettes à lecture ou lecture/écriture optique. Il comporte une source d'énergie lumineuse et des moyens de visée permettant de diriger cette énergie dans la direction de l'étiquette. Le dispositif comporte également des moyens pour limiter l'enclenchement de la source d'énergie lumineuse à la durée nécessaire à la lecture ou à l'écriture de l'étiquette, ceci de manière à limiter l'échauffement du aux pertes de la source d'énergie lumineuse et obtenir, le cas échéant, une autonomie de fonctionnement suffisante.

## Description

Il est possible avec les moyens actuels de réaliser des étiquettes optoélectroniques autonomes comportant une mémoire non volatile et pouvant être alimentées, lues, ou lues et écrites à distance. La demande de brevet suisse 02 120/94-0 du 04.07.94 décrit une étiquette de ce type en se concentrant plus particulièrement sur les moyens optoélectroniques à mettre en oeuvre pour faire fonctionner ce type d'étiquette. La demande de brevet suisse 03 759/94-1 du 13.12.94 concerne plus particulièrement les procédures qui gèrent la communication entre l'étiquette et les moyens de lecture/écriture externes. Un des problèmes importants concerne les moyens de transmission à distance par rayon lumineux de l'énergie nécessaire pour alimenter l'étiquette.

La présente invention concerne précisément un dispositif de transmission d'énergie pour étiquette électro-optique comportant une source d'énergie lumineuse et des moyens de focalisation de cette source lumineuse, caractérisé par le fait qu'il comporte d'une part des moyens de visée agencés de manière à localiser l'étiquette concernée, et d'autre part des moyens de commutation agencés de manière à mettre en service sur commande ladite source d'énergie.

La figure 1 représente à titre d'exemple un dispositif selon l'invention comportant des moyens de visée électrolumineux.

La figure 2 représente à titre d'exemple un schéma bloc des moyens de commutation de la source d'énergie.

La figure 3 représente à titre d'exemple un dispositif selon l'invention comportant des moyens de visée optiques.

La figure 4 représente un dispositif selon l'invention comportant des moyens de visée associes à des moyens de reconnaissance d'image.

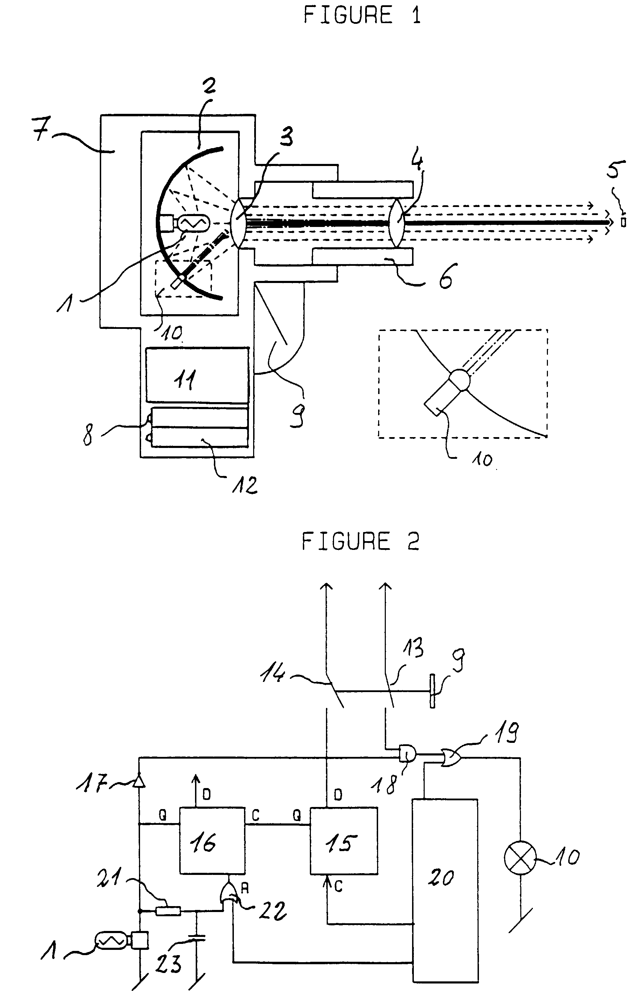

**La figure 1** représente à titre d'exemple un dispositif selon l'invention en forme de pistolet. Ce dispositif comporte une source lumineuse 1, par exemple une ampoule halogène du type de celles utilisées dans les phares de voiture. La lumière délirée par cette ampoule est dirigée par un réflecteur parabolique 2 sur un jeu de lentilles 3, 4 permettant de concentrer le faisceau lumineux dans la direction de l'étiquette 5. La lentille 4 peut être montée sur une partie coulissante 6 à la manière d'un zoom de façon à ajuster la focalisation du rayon lumineux en fonction de la distance de l'étiquette. Le tout est monte dans un boîtier de forme 7 pouvant être facilement être tenu dans la main à la façon d'un pistolet. Aussi ce boîtier comporte-t-il une crosse 8 et une gâchette 9 à deux positions. Le dispositif comporte également une diode laser 10 délivrant un faisceau lumineux fin et très directif à la manière des crayons laser utilises par les conférenciers pour designer quelque chose au tableau. Ce faisceau lumineux est également dirige en direction de l'étiquette 5 par les lentilles 3 et 4. Le dispositif comporte également un circuit de commande et de commutation 11 de la source lumineuse 1 et de la diode laser 10 commande par la gâchette 9, ainsi qu'une source d'alimentation représentée ici par un jeu de batteries 12. Il va de soi que ce jeu de batteries peut être remplace par un jeu d'accus rechargeables ou par une alimentation extérieure amenée par câble au dispositif. Par ailleurs le dispositif comporte également des moyens optoélectroniques agencés pour assurer la communication avec l'étiquette. Ces moyens ont été largement décrits dans les deux demandes de brevet mentionnées plus haut et ne sont donc pas représentés ici.

Le fonctionnement peut s'expliquer comme suit. Quand l'utilisateur veut lire une étiquette, il dirige le pistolet dans la direction de celle-ci et amene la gâchette 9 en position 1. La diode laser 10 est alors mise en service, et le rayon lumineux fin et très directif qu'elle génère permet à l'utilisateur de viser l'étiquette avec précision. Lorsque le rayon lumineux de la diode touche l'étiquette, l'utilisateur presse la gâchette en position 2, ce qui enclenche la source lumineuse principale 1, permettant ainsi d'alimenter l'étiquette et d'établir la communication avec elle. La source lumineuse 1 peut être coupée des que l'opération voulue, lecture ou écriture a été effectuée. Il est en effet très important de limiter l'enclenchement de la source principale au strict minimum. Premièrement sa consommation en énergie peut être très importante et il s'agit d'économiser les batteries ou les accus pour assurer, le cas échéant, une bonne autonomie au dispositif. Deuxièmement les ampoules ont des pertes calorifiques importantes et il faudrait prendre des dispositions spéciales, radiateur, ventilation, en cas d'enclenchement de longue durée. Et troisièmement, on pourrait avoir des interférences désagréables au cas ou plusieurs dispositifs devaient fonctionner à proximité les uns des autres.

**La figure 2** représente à titre d'exemple le schéma bloc des moyens de commutation de la source lumineuse et de la diode laser. La gâchette 9 commande deux interrupteurs 13 et 14. Lorsque la gâchette se déplace, l'interrupteur 13 se ferme d'abord, condition correspondant à ce que nous avons appelle position 1 de la gâchette. Puis c'est l'interrupteur 14 qui se ferme, ce qui correspond à la position 2 de la gâchette. Les moyens de commutation comportent deux flip flops D 15 et 16. La sortie Q du FFd 16 est reliée à l'entrée d'un ampli inverseur 17 dont la sortie est reliée à une entrée d'une porte AND 18. La sortie de cette porte 18 est branchée à une entrée d'une porte OR 19 dont la sortie commande la diode laser 10. Au départ les sorties Q des FFd 15 et 16 sont à 0 et la sortie de l'ampli 17 est à 1. Lorsque on met la gâchette en position 1, l'interrupteur 13 se ferme. Cet interrupteur est relie à la deuxième entrée de la porte AND 18 dont la sortie passe à 1, de même que la sortie de la porte 19. La diode laser 10 est alors alimentée et génère le rayon lumineux qui permet à l'utilisateur de viser l'étiquette. Lorsque l'on met la gâchette en position 2, l'interrupteur 14 se ferme. Cet interrupteur est relie à l'entrée D du FFd 15 qui reçoit sur son entrée clock un signal d'horloge génère par le circuit de commande 20. Le FFd 15 va donc passer à 1. Sa sortie Q est branchée à l'entrée clock du FFd 16 dont l'entrée D est au plus, si bien que le FFd 16 va également passer à 1 et la sortie de l'ampli 17 à 0, ce qui ferme la porte 18 et interrompt l'alimentation de la diode laser 10. Par contre la sortie Q du FFd 16 est reliée à la source lumineuse principale 1 qui est alors mise sous tension et va générer le rayon lumineux permettant d'alimenter l'étiquette. La sortie Q du FFd 16 est également reliée par la résistance 21 à une entrée du porte OR 22 et à une capacité 23. La résistance 21 et la capacité 23 forment une temporisation qui limite la durée d'enclenchement de la source lumineuse principale. Lorsque celle-ci est mise sous tension, la capacité 23 se charge lentement. Lorsque la tension à ses bornes atteind un certain seuil, la sortie de la porte 22 passe à 1. Cette sortie est reliée à l'entrée reset du FFd 16 si bien que celui-ci est remis à 0, ce qui interrompt l'alimentation de la source lumineuse principale. Ainsi celle-ci ne peut pas rester enclenchée plus d'une durée fixée préalablement, par exemple 2 secondes. Pour réenclencher le dispositif, il faut préalablement relâcher la gâchette de telle façon que le FFd 15 puisse revenir à 0. Le circuit de commande 20 est le circuit qui gère entre autres la communication entre le dispositif et l'étiquette et dont des exemples de fonctionnement ont été décrits dans les demandes de brevet mentionnes plus haut. Ce circuit peut intervenir sur les moyens de commutation de deux manières. Premièrement, si la communication avec l'étiquette dure moins que les 2 secondes prévues, ce circuit de commande 20 peut délivrer un signal de fin d'opération à la deuxième entrée de la porte 22, signal qui va arriver à l'entrée reset du FFd 16 qui revient alors à 0, interrompant du même coup l'alimentation de la source lumineuse principale. Deuxièmement il est possible d'utiliser la diode laser 10 comme moyen de transmission d'informations vers l'étiquette. A cette fin, lorsque la source lumineuse principale est enclenchée et la porte 18 fermée, le circuit de commande 20 peut générer des trains d'impulsions représentatives des informations à transmettre sur la deuxième entrée de la porte 19 et par là sur la diode laser 10 qui sert alors de diode émettrice.

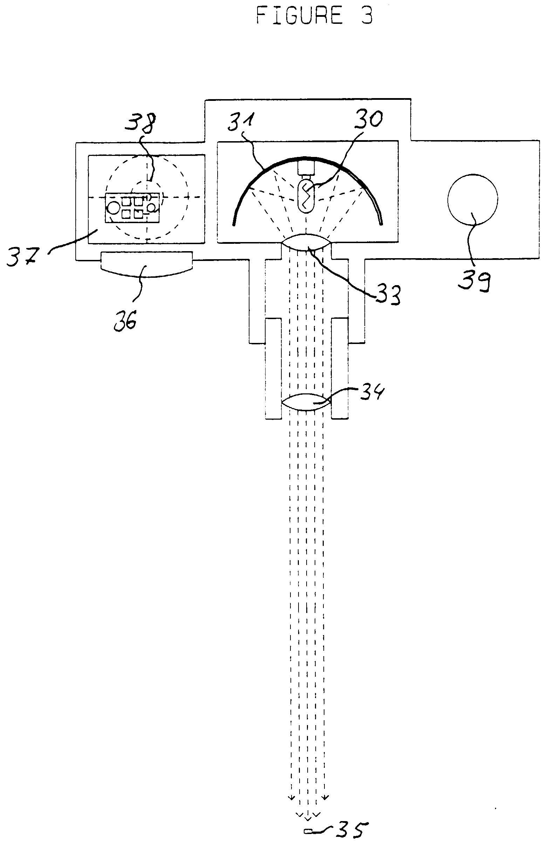

**La figure 3** représente à titre d'exemple un dispositif selon l'invention comportant des moyens de visée uniquement optiques. En fait ces moyens de visée optiques peuvent être similaires à ceux utilises sur des appareils de photo 37 et disposes sensiblement de la même manière. Sur la figure on retrouve la source de lumière 30 avec son réflecteur parabolique 31 et ses lentilles de focalisation 33 et 34 de la source de lumière sur l'étiquette 35. Dans ce cas cependant la visée se fait de manière entièrement optique par une combinaison de lentilles permettant de visualiser dans une fenêtre 36 l'image des objets qui se trouvent dans l'axe du faisceau lumineux Il est ainsi possible de centrer l'étiquette au moyen d'une cible 38 disposée dans la fenêtre. Ces moyens de visée optique sont bien sur représentés de manière très schématique dans la mesure où il existe des dizaines de systèmes connus, soit avec leur optique propre, soit avec une optique combinée avec les moyens de focalisation, systèmes utilises aussi bien en photographie que dans des systèmes dérivés, comme par exemple dans les armes à feu. Il s'agit là le plus souvent de systèmes passifs ne consommant pas d'énergie, contrairement au dispositif décrit à la figure 1. On peut donc le laisser fonctionner en permanence et n'utiliser qu'un déclencheur 39 pour enclencher sur commande la source lumineuse. Dans les cas décrits dessus, cette commande se fait manuellement. On peut cependant, comme cela est décrit à la figure suivante, incorporer cette commande dans un processus automatique.

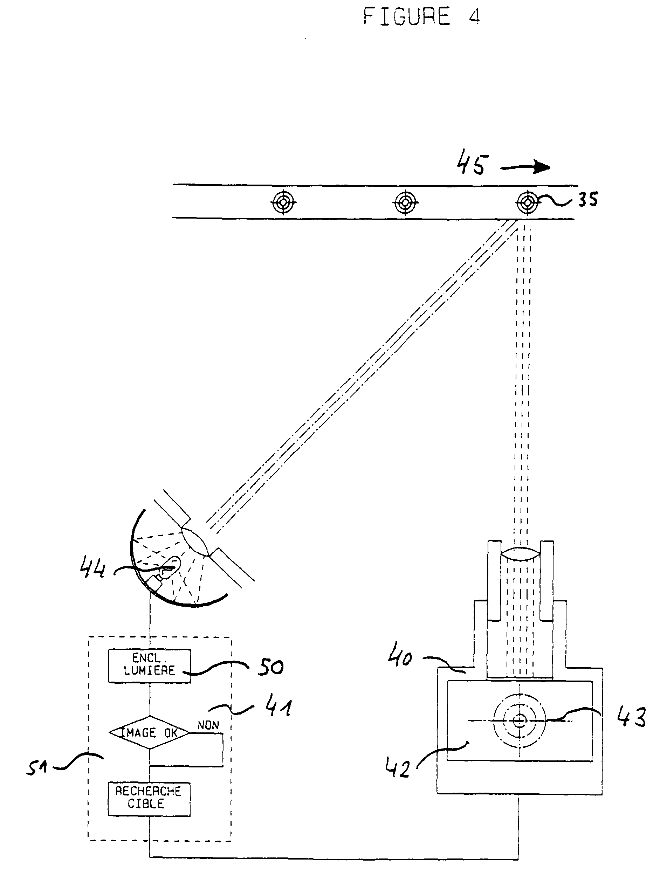

**La figure 4** représente un dispositif selon l'invention comportant des moyens de visée associes a des moyens de reconnaissance d'image 51. Dans ce cas les moyens de visée sont représentés par une camera CCD 40 dirigée sur une ligne de transfert 45 équipée d'étiquettes 35 à lecture/écriture optique. La première demande de brevet citée plus haut mentionne la possibilité d'associer ce type d'étiquettes à des cibles pouvant être repérées par des moyens optiques. Ainsi la camera CCD comporte une fenêtre pour visualiser une image d'une étiquette détectée et pour centrer ladite image dans la fenêtre. Elle est reliée à des moyens de digitalisation et d'analyse d'image 51 tels qu'ils sont connus et utilises de nos jours dans nombre de systèmes de positionnement pour installations automatisées. De tels moyens d'analyse d'images permettent de délivrer un signal lorsque l'image reçue 42 est conforme à des critères préprogrammés, par exemple lorsque une cible de dimensions conformes 43 se trouve au centre de cette image. Ce signal 50 peut d'une part enclencher la source lumineuse principale, et d'autre part stopper si nécessaire la ligne de transfert 45 pendant les opérations de lecture écriture. Dans le cas décrit dans la figure 4, les moyens de visée et la source lumineuse sont séparés physiquement. Les moyens de communication avec l'étiquette 35 peuvent être intégrés soit à l'un, soit à l'autre, soit être eux-même complètement séparés physiquement.

Il existe bien sûr bien d'autres possibilités d'application du dispositif selon l'invention, mais leur description n'apporterait aucun élément nouveau.

## Revendications

1. Dispositif de transmission d'énergie pour étiquette électronique pouvant être lue ou lue et écrite de manière optique (5,35), comportant une source d'énergie lumineuse (1,30,44) émettant de la lumière, **caractérisé par le fait que** le dispositif comporte d'une part des moyens de visée (10,36,37,38,40,42,51) agencés de manière à détecter l'étiquette concernée, et d'autre part des moyens de commutation (9,16,23,39,50) agencés de manière à enclencher sur commande ladite source d'énergie lumineuse.

2. Dispositif selon la revendication 1, **caractérisé par le fait que** lesdits moyens de commutation comportent une capacité (23) étant reliée à un flip flop (16), ladite capacité se charge lorsque ladite source d'énergie lumineuse est alimentée, pour une tension à ses bornes égale à une tension de seuil ledit flip flop est remis à 0, limitant la durée d'enclenchement de ladite source d'énergie lumineuse.

3. Dispositif selon la revendication 1, **caractérisé par le fait que** le dispositif comporte un boîtier de forme (7) avec une gâchette (9) à deux positions, lorsque la gâchette est dans une première position, le moyen de visée (10) est enclenché générant un faisceau lumineux directif permettant la localisation de l'étiquette en dirigeant ledit faisceau sur ladite étiquette, lorsque gâchette est dans une deuxième position, la source d'énergie lumineuse est enclenchée émettant de la lumière.

4. Dispositif selon la revendication 1 ou 3, **caractérisé par le fait que** lesdits moyens de visée comportent une diode laser (10) émettant un faisceau lumineux directif, et le dispositif comporte un jeu de lentilles (3,4), permettant de concentrer le faisceau lumineux dans la direction de l'étiquette (5).

5. Dispositif selon la revendication 4, **caractérisé par le fait que** lesdits moyens de visée comportent une lentille (4) montée sur une partie coulissante (6) à la manière d'un zoom de façon à ajuster la focalisation du rayon lumineux en fonction de la distance de l'étiquette (5).

6. Dispositif selon la revendication 1, **caractérisé par le fait que** le dispositif comporte des lentilles (3,4,33,34) et un réflecteur parabolique (2,31) permettant de concentrer le faisceau lumineux dans la direction de l'étiquette (5).

7. Dispositif selon la revendication 1, **caractérisé par le fait que** lesdits moyens de visée sont similaires à un appareil de photo (37) avec une fenêtre (36) comportant une cible (38), permettant de visualiser une image d'une étiquette (35) détectée dans la fenêtre et de centrer ladite image d'une étiquette détectée au moyen de la cible.

8. Dispositif selon la revendication 7, **caractérisé par le fait que** ledit appareil de photo (37) comporte un déclencheur (39), permettant l'enclenchement de ladite source d'énergie lumineuse (30) pour générer de la lumière.

9. Dispositif selon la revendication 1, **caractérisé par le fait que** lesdits moyens de visée comportent une camera (40) pour visualiser une image (42) d'une étiquette (35) détectée dans la fenêtre et de centrer ladite image d'une étiquette détectée dans la fenêtre.

10. Dispositif selon la revendication 9, **caractérisé par le fait que** lesdits moyens de visée comportent des moyens de digitalisation et d'analyse d'image (51), effectuant une comparaison d'une image (42) détectée avec une image d'une cible préprogrammée (43), permettant une détection de manière automatique d'une étiquette électronique (35).

11. Dispositif selon la revendication 9 ou 10, **caractérisé par le fait que** lesdits moyens de visée comportent des moyens de digitalisation et d'analyse d'image (51) délivrant un signal pour enclencher de manière automatique la source d'énergie lumineuse lorsque ladite image détectée correspond à l'image préprogrammée.
